# EUROPEAN PATENT APPLICATION

(11) **EP 4 825 599 A1**
(43) Date of publication of application: **21.10.2026**
(21) Application number: 26168834.5
(22) Date of filing: 30.03.2026
(51) Int. Cl.: B41J 29/13, B41J 2/175, B41J 11/00, B41J 29/02, H04N 1/00, H04N 1/04

(54) **RECORDING APPARATUS INCLUDING READING PORTION**

(30) Priority: 14.04.2025 JP 2025066509
(71) Applicant: Canon Kabushiki Kaisha, Tokyo 146-8501 (JP)
(72) Inventor: ASAI, Yasuyuki, Tokyo (JP); WATANABE, Hikaru, Tokyo (JP)
(74) Representative: WESER & Kollegen Patentanwälte PartmbB

(57) **Abstract**

A recording apparatus (100) includes: a casing (602); a recording portion (3) configured to perform recording on a recording material; a liquid supply portion (410) disposed on a side of a front surface of the casing, the liquid supply portion being configured to supply liquid to the recording portion by being connected to a liquid container (430) configured to store the liquid; and a reading unit (600, 600a) disposed on the side of the front surface of the casing and configured to perform reading from a document at a reading position, the reading unit being rotatable about a rotation center of a cover shaft (600X) extending in a first direction between an open position at which the reading position is opened and a closed position at which the reading position is covered, wherein the liquid supply portion and the reading unit are disposed so as to partially overlap each other in the first direction.

## Description

### TECHNICAL FIELD

The present disclosure relates to a recording apparatus including a reading portion.

### BACKGROUND

Hitherto, as a recording apparatus such as a printer, there has been a multi-function printer on which a scanner is installed as a reading apparatus. The configurations of arranging the reading apparatus with respect to the recording apparatus include a configuration in which the reading apparatus is disposed at the rear of the recording apparatus and a configuration in which the reading apparatus is disposed at the front thereof. As a recording apparatus having the latter configuration, for example, there is a printer disclosed in Japanese Patent Application Laid-open No. 2021-158403. In this printer, a cover forming the front surface of the casing is configured to be pivotable about a cover shaft between an open position at which the reading position of a reading portion in a scanner is opened and a cover position at which the reading position is covered. In this printer, an injection port for ink, which serves as a liquid to be used for recording, is disposed at a position different from that of the cover in the axial direction of the cover shaft so as not to interfere with rotation of the cover.

### SUMMARY

The present disclosure is directed to provide a technology capable of achieving downsizing of a recording apparatus in which a reading portion is disposed in at the front of the recording apparatus.

The present disclosure in its one aspect provides a recording apparatus as specified in claims 1 to 20.

According to the present disclosure, it is possible to achieve downsizing of the recording apparatus in which the reading portion is disposed in the front portion of the recording apparatus.

Features of the present disclosure will become apparent from the following description of embodiments with reference to the attached drawings. The following description of embodiments is described by way of example.

### BRIEF DESCRIPTION OF THE DRAWINGS

FIG. 1 is a sectional view illustrating the configuration of the main part of a printer.
FIG. 2 is a view illustrating a roll sheet mounted on a spool shaft.
FIG. 3 is a perspective view illustrating the printer including a scanner.
FIG. 4A is a perspective view illustrating the positional relationships between left and right ink supply portions and the scanner when a front cover is in a closed state.
FIG. 4B is a perspective view illustrating the positional relationships between the left and right ink supply portions and the scanner when the front cover is in an open state.
FIG. 5A is a partial side view illustrating the positional relationship between the left ink supply portion and the scanner, which are illustrated in FIG. 4A and FIG. 4B, when a front surface side part of the casing of the printer is viewed in an -X direction.
FIG. 5B is a partial side view illustrating the positional relationship between the right ink supply portion and the scanner, which are illustrated in FIG. 4A and FIG. 4B, when the front surface side part of the casing of the printer is viewed in the -X direction.
FIG. 6A is a partial front view illustrating the positional relationships between the ink supply portions and the scanner in the X direction.
FIG. 6B is a partial enlarged front view illustrating the positional relationship between the ink supply portion and an overlap portion that overlaps the ink supply portion in the scanner in the X direction.
FIG. 7A is a perspective view illustrating the configuration of the ink supply portion in a state in which an ink tank is mounted.
FIG. 7B is a view in which the housing is omitted from FIG. 7A.
FIG. 7C is a perspective view of the ink supply portion in which the ink tank is removed and the housing is not illustrated.
FIG. 8 is a rear perspective view of the front cover.
FIG. 9 is a detailed rear view of the front cover.
FIG. 10 is a perspective view of the printer in a state in which the front cover is removed.
FIG. 11 is a detailed view of the printer in a state in which the front cover is removed.
FIG. 12A is a sectional view illustrating a state in which a temporarily hooked portion is hooked on a temporary hooking locking portion in the assembly sequence of the front cover.
FIG. 12B is an enlarged view of FIG. 12A and illustrates a state in which the temporarily hooked portion is hooked on the temporary hooking locking portion in the assembly sequence of the front cover.
FIG. 12C is a sectional view illustrating a state in which the front cover is in contact with a guide portion in the assembly sequence of the front cover.
FIG. 12D is an enlarged view of FIG. 12C and illustrates a state in which the front cover is in contact with the guide portion in the assembly sequence of the front cover.
FIG. 12E is a sectional view illustrating a state in which the front cover is incorporated in the scanner in the assembly sequence of the front cover.
FIG. 12F is an enlarged view of FIG. 12E and illustrates a state in which the front cover is incorporated in the scanner in the assembly sequence of the front cover.
FIG. 13A is a sectional view schematically illustrating the configuration of the scanner when a first part is at a cover position at the time of opening and closing of the scanner.
FIG. 13B is a sectional view schematically illustrating the configuration of the scanner when the first part is at an open position at the time of opening and closing of the scanner.
FIG. 14 is a schematic view illustrating the plane configuration of a connection portion.
FIG. 15 is a schematic front view illustrating the positional relationship between the ink supply portion and the scanner.

### DESCRIPTION OF THE EMBODIMENTS

A mode for carrying out this disclosure is exemplarily described below in detail based on an embodiment with reference to the drawings. However, the dimensions, the materials, the shapes, the relative arrangements, and the like of components described in this embodiment are to be appropriately changed depending on the configuration of an apparatus to which the disclosure is applied and various conditions. That is, the dimensions, the materials, the shapes, the relative arrangements, and the like do not intend to limit the scope of this disclosure to the following embodiment. Furthermore, although a plurality of features are described in the embodiment, all of the plurality of features are not necessarily essential to the disclosure, and the plurality of features may be optionally combined. Moreover, in the accompanying drawings, the same reference numerals are assigned to the same or similar configurations, and the redundant description is omitted.

Now, an inkjet printer is described as an example of a recording apparatus, but the printing system is not limited to the inkjet system, and the present disclosure is also applicable to various systems such as electrophotographic systems and thermal transfer systems. As the inkjet system, various systems such as a system that uses heating elements, a system that uses piezoelectric elements, a system that uses electrostatic elements, or a system that uses MEMS elements can be used. Furthermore, the present disclosure is also applicable to the so-called multi-function printer, which is a complex machine having a copying function and a scanning function.

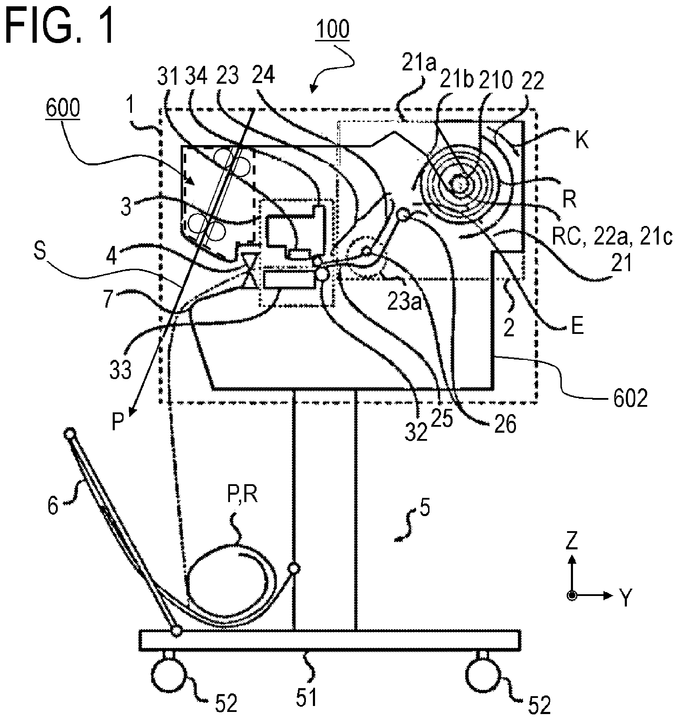

FIG. 1 is a sectional view illustrating the configuration of the main part of a printer 100, which is a recording apparatus including a scanner of the present embodiment.

Here, in each of FIG. 1 and subsequent figures, a Y direction corresponds to a direction from the front surface toward the rear surface of the printer 100. Furthermore, an X direction is the width direction of the printer 100 and corresponds to a direction from the left side toward the right side. A Z direction is a direction along the gravity direction, which is perpendicular to the installation surface of the printer 100, and corresponds to a direction from the lower side toward the upper side. Each figure illustrates a state in which the printer 100 is installed on a horizontal surface as a normally assumed installation state.

As illustrated in FIG. 1, the printer 100 has an overall configuration including an apparatus main body 1, a sheet supply portion 2, which is a sheet supply device, a printing portion 3, a cutter 4, a stand 5, a basket 6, a discharge guide 7, and the like. The printing portion 3 is a recording portion configured to perform recording such as printing on a sheet, which serves as a recording material, using ink, which serves as a recording liquid. Note that, in the present specification, a cut sheet P and a roll sheet R are also collectively referred to simply as "sheet".

The apparatus main body 1 holds each portion forming the printer 100, and is supported by the stand 5 at a height that is easy for a user to operate from the installation floor surface. A leg portion 51 of the stand 5 is provided with casters 52 to facilitate movement on the installation surface.

The sheet supply portion 2 includes a roll holder 21 configured to rotatably support the roll sheet R near both end portions of a rotation center Rc of the roll sheet R. Moreover, the sheet supply portion 2 includes a roll cover 22 configured to cover the upper part of the roll sheet R and rotatably supported substantially coaxially with the rotation center Rc, and a supply passage 23 configured to guide the roll sheet R and the cut sheet P toward the printing portion 3.

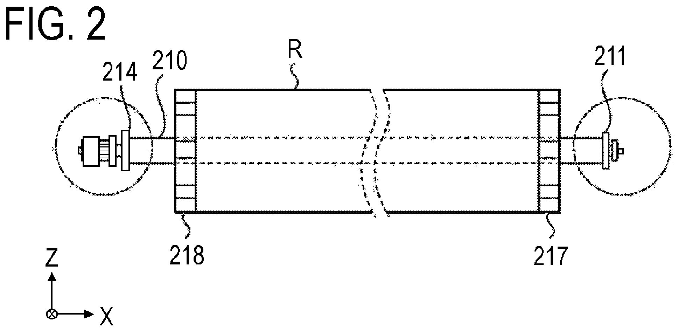

As illustrated in FIG. 2, the roll sheet R is supported by flanges 217 and 218 fixed to a spool shaft 210, and the roll sheet R and the spool shaft 210 rotate integrally.

The roll holder 21 has an opening portion 21a for leading the spool shaft 210 to which the roll sheet R is fixed into the sheet supply portion 2, and a downward inclined surface 21b configured to guide the spool shaft from the opening portion 21a. The inclined surface 21b is configured to guide the spool shaft 210 to which the roll sheet R is fixed to a set position 21c, and to rotatably support the roll sheet R at the set position 21c.

The roll cover 22 protects the roll sheet R from dirt such as dust by covering the upper surface of the roll sheet R in the state of being held by the roll holder 21. After the roll cover 22 is rotated and moved in the direction of an arrow K to enter an open state, the roll sheet R is attached to or detached from the roll holder 21. A rotation center 22a of the roll cover 22 is provided at a position at which an inner part of the roll cover 22 does not come into contact with an outer peripheral portion of the roll sheet R. That is, specifically, the rotation center 22a may be substantially coaxial with the rotation center Rc of the roll sheet R held by the roll holder 21.

The supply passage 23 is configured to guide the roll sheet R or the cut sheet P described above toward the printing portion 3. The supply passage 23 includes an upper guide 24, a lower guide 25, and the like, and forms, as a sheet guide passage, a gap (narrow passage) between the upper guide 24 and the lower guide 25 that face each other. With this, the supply passage 23 is configured to guide, toward the printing portion 3, one end close to the printing portion 3 of the roll sheet R or the cut sheet P that are supplied from the sheet supply portion 2. The supply passage 23 forms a guide passage that extends obliquely downward from an introduction portion E, which is a sheet insertion part, toward the printing portion 3, and further extends substantially horizontally toward the printing portion 3 after being bent at a bent portion 23a, which is a holding portion, at an intermediate point. Rotatable assist rollers 26 are disposed on both the upper guide 24 and the lower guide 25 to assist smooth passage of the sheet.

The printing portion 3 performs printing (recording) on the sheet supplied at a printing position. The printing portion 3 includes a conveyance roller 32 for conveying the sheet, and a platen 33 configured to guide the sheet during a printing operation. In addition, the printing portion 3 includes a print head 31 positioned on the side opposite to the platen 33 with the sheet interposed therebetween, and a carriage 34 configured to detachably hold the print head 31, and to cause the print head 31 to perform reciprocal scanning in a direction orthogonal to the sheet conveyance direction. During printing, ink ejection from the print head 31 synchronized with reciprocal movement of the carriage 34 and conveyance of the sheet are alternately repeated to print an image on the sheet.

On the downstream side of the printing position, the cutter 4 configured to cut the roll sheet R when the sheet is the roll sheet R is provided. The printed cut sheet P or the roll sheet R cut by the cutter 4 slides down the downward slope of the discharge guide 7 under its own weight and falls toward the basket 6. The basket 6 is supported by the stand 5, and is configured to be capable of accommodating the sheet that is discharged and falls. The basket 6 is folded or contracted as necessary to achieve space saving when not in use.

Here, the operation in the case of the roll sheet R is described. The user inserts the leading end of the roll sheet R held by the roll holder 21 from the introduction portion E to supply the roll sheet R to the printing portion 3 through the supply passage 23. The roll sheet R conveyed by the conveyance roller 32, which is conveyance member, undergoes alternately repeated ink ejection from the print head 31, which is recording unit, synchronized with reciprocal movement of the carriage 34, and conveyance of the sheet, thereby printing an image on the sheet. After printing is completed, the rear end part of the printed image is conveyed to the position of the cutter 4 and cut. The separated roll sheet R slides down the downward slope of the discharge guide 7 under its own weight, falls toward the basket 6, and is accommodated therein.

A scanner 600, which is described later, is disposed on the front side of the apparatus main body 1, and is configured to read an image on a sheet S, which serves as a document, while conveying the sheet S in the direction of an arrow P.

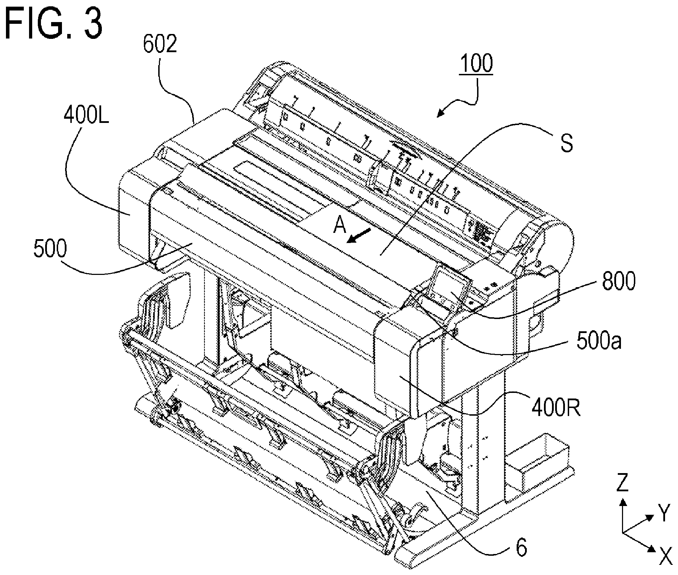

With reference to FIG. 3 to FIGS. 7A to 7C, a characteristic configuration in the printer 100 according to the present embodiment is described in detail. FIG. 3 is a perspective view illustrating the printer 100 including the scanner 600 in the present embodiment.

As illustrated in FIG. 3, the front side of the external appearance of a casing 602 of the printer 100 includes an ink tank cover 400R disposed on the right side, an ink tank cover 400L disposed on the left side, and a front cover 500 sandwiched therebetween. The front cover 500 is an exterior that is detachably mountable on the casing 602 as a part of the front surface of the casing 602 so as to cover the scanner 600 (a first part 600a including a reading portion (reading sensor) 601). In reading by the scanner 600, the sheet S is inserted into a sheet feeding portion 500a at the upper part of the front cover 500 in the direction of an arrow A, and the read sheet S is discharged toward the basket 6.

Furthermore, on a rear side of the ink tank cover 400R, an operation panel 800 is configured so as to be able to stop at any angle by a torque hinge provided on the rotation center axis. FIG. 3 illustrates a state in which the operation panel 800 is raised at approximately 60 degrees toward the front side with respect to the exterior top surface of the casing 602. The operation panel 800 is also rotatable in the opposite direction toward a laid-down side to 0 degrees at which the exterior top surface of the casing 602 is flush with the operation panel 800. In the present configuration, a torque hinge is used for stopping rotation of the operation panel 800, but the present embodiment is not limited thereto, and a torque limiter, frictional force by spring pressing, or the like may be used.

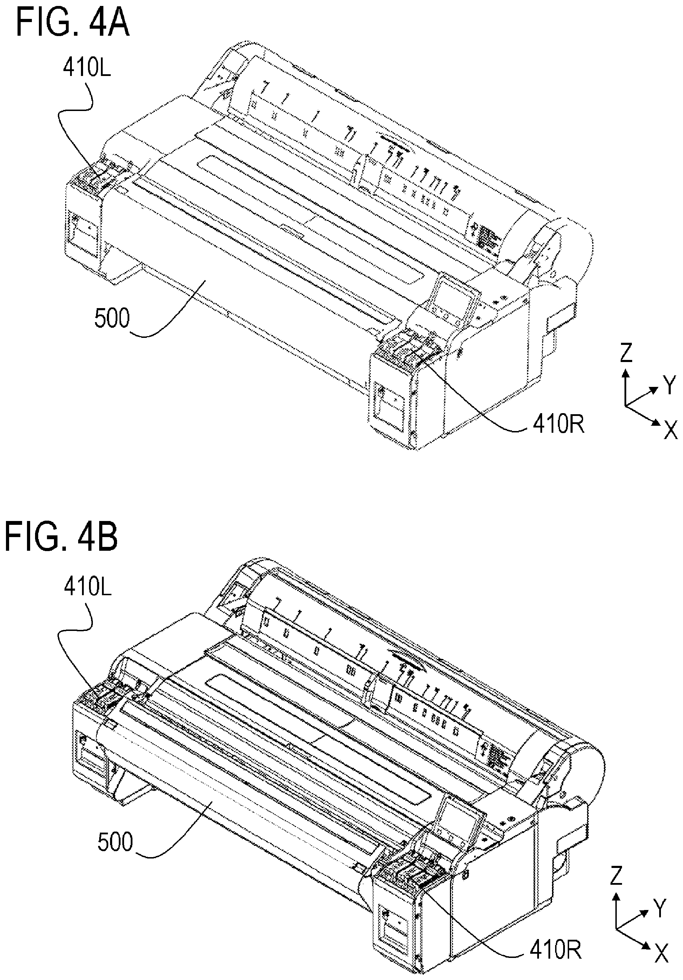

FIG. 4A and FIG. 4B are perspective views illustrating the positional relationships between ink supply portions 410 (liquid supply portions) and the scanner 600. FIG. 4A illustrates a state in which the front cover 500 is in a closed state, and FIG. 4B illustrates a state in which the front cover 500 is in an open state. Note that FIG. 4A and FIG. 4B illustrate a state without the ink tank cover 400R and the ink tank cover 400L.

On the front surface side of the casing 602 of the printer 100, on the right side in the width direction (X direction), an ink supply portion 410R having installed thereon three ink tanks 430, each of which serves as a liquid container configured to store liquid to be used in the printing portion 3, is disposed. Furthermore, on the left side, an ink supply portion 410L having installed thereon the two ink tanks 430 is disposed. The front cover 500 is disposed so as to be sandwiched on both sides by these left and right ink supply portions 410L and 410R. This front cover 500 can be rotated from the state illustrated in FIG. 4A in which the scanner 600 is closed (covered) so as to open the scanner 600, which is described later, as illustrated in FIG. 4B. Furthermore, in the configuration, when the ink tank 430 is replaced, the removing operation involves taking out the ink tank 430 by lifting the ink tank 430 upward, and the mounting operation involves inserting the ink tank 430 by dropping the ink tank 430 from above the ink supply portion 410.

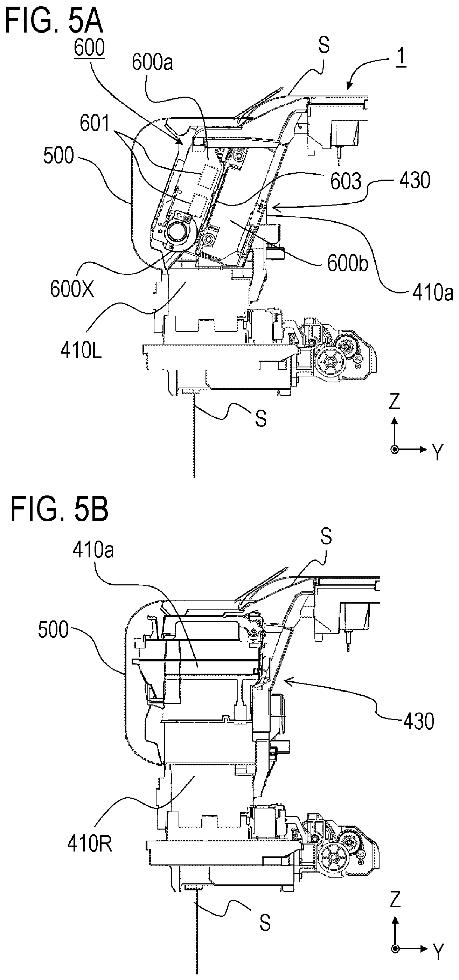

FIG. 5A and FIG. 5B are partial side views illustrating the positional relationships between the ink supply portions 410L and 410R and the scanner 600 in the X direction, which serves as a first direction. FIG. 5A is a view illustrating the positional relationship between the ink supply portion 410L and the scanner 600 when the front surface side part of the casing 602 of the printer 100 is viewed in the -X direction. FIG. 5B is a view illustrating the positional relationship between the ink supply portion 410R and the scanner 600 when the front surface side part of the casing 602 of the printer 100 is viewed in the -X direction.

As illustrated in FIG. 5A, the scanner 600 includes the first part 600a (reading unit) that faces the surface to be read of the sheet S, and a second part 600b that faces the surface (rear surface) on the side opposite to the surface to be read of the sheet S. The first part 600a and the second part 600b are disposed to face each other so as to sandwich the sheet S, and a sheet conveyance passage 603 is formed therebetween. The sheet S is conveyed on the sheet conveyance passage 603 between the first part 600a and the second part 600b, and an image or the like on the surface to be read is read by the reading portion 601 included in the first part 600a. The reading portion 601 may include, for example, a Contact Image Sensor (CIS) in which photo acceptance units are arranged in a width corresponding to a large-format document to be used. However, it is also possible to use other linear sensors using a CCD or the like. The first part 600a is engaged with the front cover 500, and the second part 600b is engaged with the apparatus main body 1.

As described with FIG. 4A and FIG. 4B, the first part 600a (front cover 500) of the scanner 600 can be rotated counterclockwise about a rotation shaft 600X provided on the left and the right. The first part 600a of the scanner 600 is provided rotatably about the rotation shaft 600X that serves as a cover shaft and extends along the X direction, which serves as the first direction. The first part 600a is rotatable (movable) about the axis of rotation of the rotation shaft 600X between an open position at which the sheet conveyance passage 603, which serves as a reading position and at which the reading portion 601 reads the surface to be read of the sheet S, is opened, and a cover position (closed position) at which the sheet conveyance passage 603 is covered.

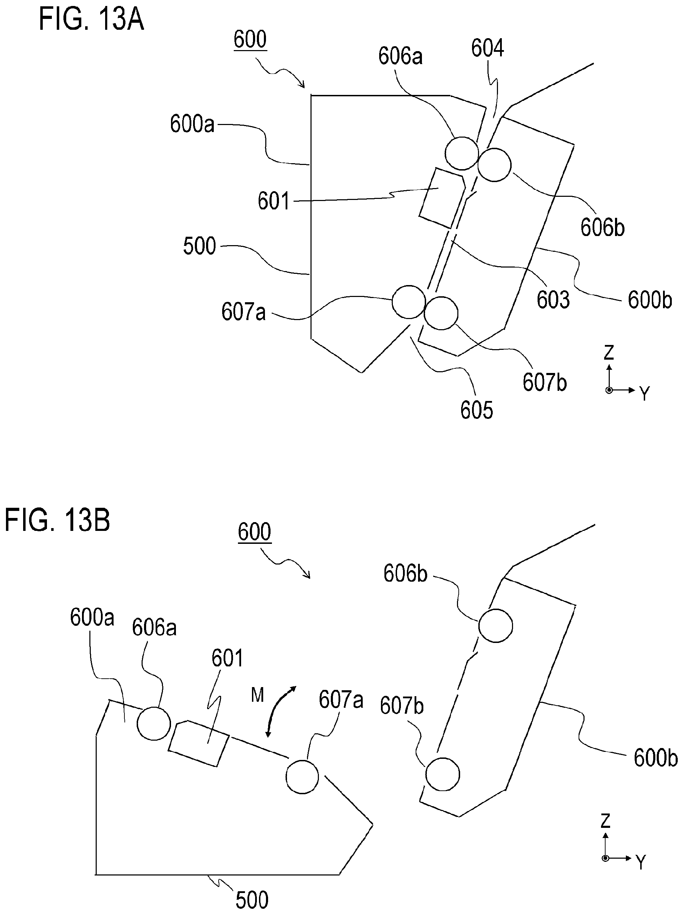

The states at the time of opening and closing of the scanner 600 are described with reference to FIG. 13A and FIG. 13B. FIG. 13A is a sectional view schematically illustrating the configuration of the scanner 600 when the first part 600a is at the cover position, and FIG. 13B is a sectional view schematically illustrating the configuration of the scanner 600 when the first part 600a is at the open position. As illustrated in FIG. 13A, when the first part 600a is at the cover position, the scanner 600 is in a state in which the sheet conveyance passage 603, which serves as the reading position for reading the surface to be read of the sheet S, which is the document, is formed. In the sheet conveyance passage 603, a pair of upstream conveyance rollers 606a and 606b is disposed between an insertion port 604 for the sheet S and the reading portion 601, and a pair of downstream conveyance rollers 607a and 607b is disposed between the reading portion 601 and a discharge port 605 for the sheet S. The sheet S is conveyed on the sheet conveyance passage 603 by rotation of the pair of conveyance rollers 606a and 606b and the pair of conveyance rollers 607a and 607b. As illustrated in FIG. 13B, the first part 600a of the scanner 600 is rotatable in an M direction about the rotation shaft 600X. When the first part 600a is moved to the open position, the respective conveyance rollers of the pair of conveyance rollers 606a and 606b and the pair of conveyance rollers 607a and 607b are brought into a state of being separated from each other, the sheet conveyance passage 603 is opened, and the reading portion 601 is brought into a state of being exposed to the outside.

As illustrated in FIG. 5A and FIG. 5B, the ink supply portions 410L and 410R and the scanner 600 (front cover 500) are disposed so as to have regions in which the ink supply portions 410L and 410R and the scanner 600 overlap each other when viewed in the X direction, which serves as the first direction. The rotation shaft 600X of the scanner 600 also has regions in which the rotation shaft 600X and the ink supply portions 410L and 410R overlap each other when viewed in the X direction, which serves as the first direction.

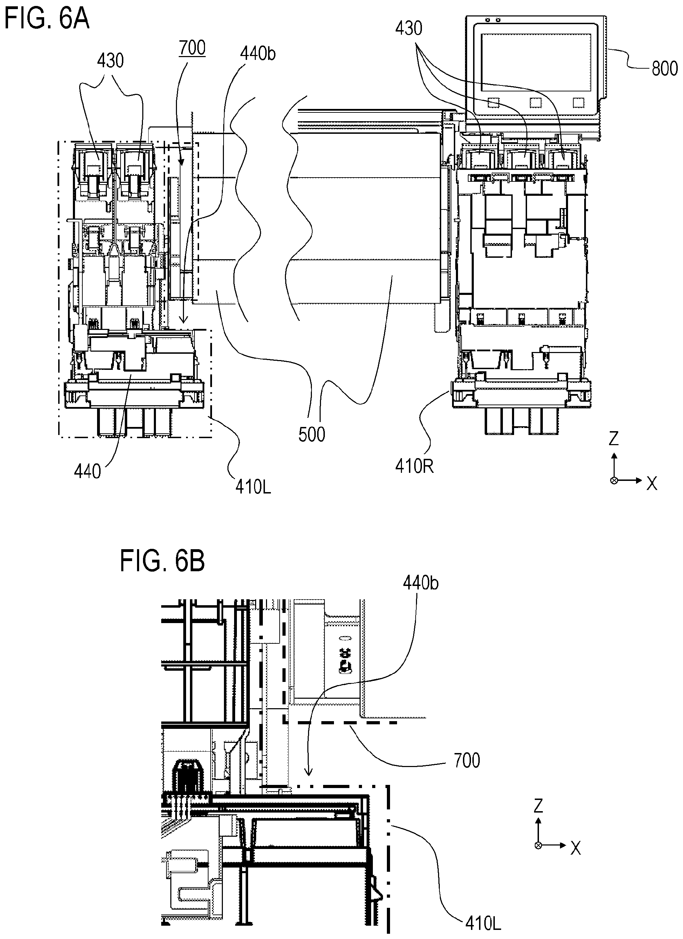

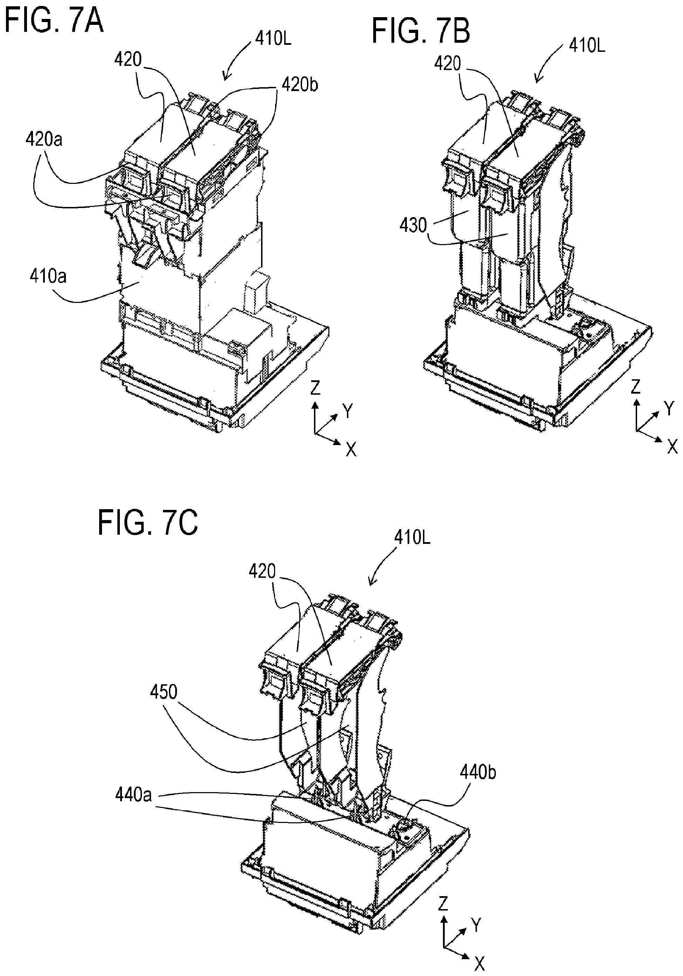

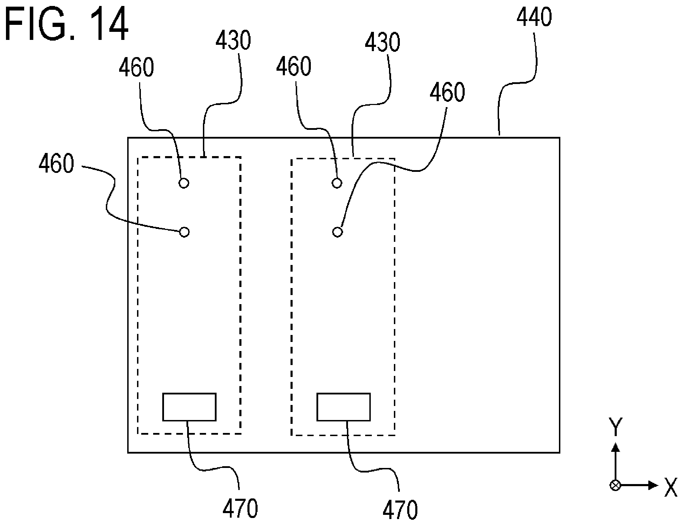

FIG. 6A is a partial front view illustrating the positional relationships between the ink supply portions 410L and 410R and the scanner 600 (front cover 500) in the X direction. FIG. 6B is a partial enlarged front view illustrating the positional relationship between the ink supply portion 410L and an overlap portion 700 that overlaps the ink supply portion 410L in the scanner 600 (front cover 500) in the X direction. FIG. 7A to FIG. 7C are perspective views illustrating the configuration of the ink supply portion 410L. FIG. 7A is a perspective view of the ink supply portion 410L in a state in which the ink tank 430 is mounted, and FIG. 7B is a view in which a housing 410a is omitted from FIG. 7A. FIG. 7C is a perspective view of the ink supply portion 410L in which the ink tank 430 is removed and the housing 410a is not illustrated. FIG. 14 is a schematic view illustrating the planar configuration of a connection portion 440.

As illustrated in FIG. 7A to FIG. 7C, the ink supply portion 410L includes the housing 410a, levers 420, the connection portions 440 (440a and 440b), and ink tank accommodation portions 450. The ink supply portion 410L includes the plurality of connection portions 440, and is thus capable of allowing the plurality of ink tanks 430 to be mounted thereon. The ink tank 430 is accommodated in the ink tank accommodation portion 450 such that an ink supply port (not illustrated) is connected to the supplied port of the connection portion 440. The lever 420 is provided so as to cover above the ink tank 430 mounted in the ink tank accommodation portion 450. The lever 420 is attached rotatably about a rotation shaft 420b having the axis of rotation extending in the X direction with respect to the housing 410a of the ink supply portion 410L. The lever 420 is provided with a handle 420a. The lever 420 is movable through operation of the handle 420a between an engagement position at which the lever 420 is engaged with the housing 410a and a retraction position at which the engagement is released and the lever 420 is retracted from above the ink tank 430. When the lever 420 is positioned at the retraction position, insertion and removal of the ink tank 430 with respect to the ink tank accommodation portion 450 in the Z direction is possible. The connection portion 440 is connected to the ink tank 430, and can receive supply of ink from the ink tank 430. As illustrated in FIG. 14, the connection portion 440 is provided with, for example, needles 460 configured to allow liquid or gas to pass through between the connection portion 440 and a liquid container such as the ink tank 430, and sensors 470 configured to detect mounting and detaching of a liquid container such as the ink tank 430. The connection portion 440 is connected to a flow passage portion configured to cause ink to flow toward a drive valve configured to open and close, which is not illustrated, in the ink supply portion 410L. This ink supply portion 410L is coupled to the printing portion 3 through a tube, which is not illustrated, and supplies ink to the printing portion 3. The ink supply portion 410R is configured in a similar manner to the ink supply portion 410L.

As illustrated in FIG. 7C, the ink supply portion 410L includes the three connection portions 440 (440a and 440b) corresponding to the three ink tank accommodation portions 450. Specifically, among the three connection portions 440, the ink tank accommodation portions 450 are mounted to the two connection portions 440a (first connection portions). The ink tank accommodation portion 450 is not mounted to the remaining one connection portion 440b (second connection portion). This connection portion 440b is the spare connection portion 440 that is not used in a state in which the scanner 600 is mounted on the printer 100, but is used when the printer 100 is used with the scanner 600 removed. When the printer 100 is used without the scanner 600 installed, the ink tank accommodation portion 450 is mounted also to the connection portion 440b, and the connection portion 440b is connected to the ink tank 430 to be able to receive supply of ink.

The plurality of connection portions 440 are arranged along the X direction, which serves as the first direction, and the plurality of ink tanks 430, which are mounted to the connection portions 440 so as to be aligned in the Z direction, which serves as a second direction, are accommodated in the respective ink tank accommodation portions 450 so as to be arranged along the X direction as well. The spare connection portion 440b is disposed on the inner side (center side) with respect to the connection portion 440a in the X direction. The present embodiment has a configuration in which the spare connection portion 440b is provided in the ink supply portion 410L, but may have a configuration in which the spare connection portion 440b is provided in the ink supply portion 410R, or a configuration in which the spare connection portion 440b is provided in each of the ink supply portions 410L and 410R. In any of the configurations, the spare connection portion 440b is disposed on the inner side (center side) with respect to the connection portion 440a in the X direction, that is, on the side that overlaps the mounting space of the scanner 600.

As illustrated in FIG. 6A, in the configuration, the ink supply portion 410L (long dashed double-short dashed line region) overlaps a part (broken line region) of the scanner 600 (front cover 500). That is, the ink supply portion 410L and the scanner 600 are disposed so as to partially overlap each other in the X direction, which serves as the first direction. The ink supply portion 410L overlaps a part of the scanner 600 in the X direction, which serves as the first direction, at the spare connection portion 440b that is not used. The spare connection portion 440b and the scanner 600 have a region in which the spare connection portion 440b and the scanner 600 overlap each other when viewed in the Z direction, which serves as the second direction and is orthogonal to the X direction, which serves as the first direction. In the present embodiment, a configuration example having a relationship in which the first direction and the second direction are orthogonal to each other is described, but a configuration having a relationship in which the first direction and the second direction intersect without being orthogonal may be used. The ink tank 430 and the connection portion 440a to which the ink tank 430 is connected are disposed to be aligned along the Z direction, which serves as the second direction, and the ink tank 430 mounted on the connection portion 440a and the scanner 600 are disposed to be aligned along the X direction, which serves as the first direction. The ink tank 430 and the scanner 600 have a region in which the ink tank 430 and the scanner 600 overlap each other when viewed in the X direction, which serves as the first direction.

As illustrated in the enlarged view of the overlap portion 700 in FIG. 6B, the ink tank accommodation portion 450 is not disposed at the connection portion 440b that is not used, and a part of the scanner 600 is disposed in the resulting vacant space. With this, the above-mentioned overlap arrangement between the scanner 600 and the ink supply portion 410L is formed.

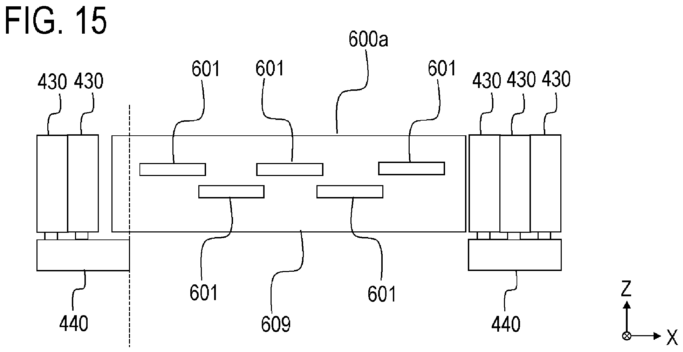

FIG. 15 is a schematic view illustrating the overlap relationship between the ink supply portion 410L and the reading portion (reading sensor) 601 in the scanner 600 (front cover 500). The scanner 600 includes the plurality of reading portions (reading sensors) 601. The plurality of reading portions 601 are held in a predetermined arrangement by a sensor holding portion 609 in the first portion 600a of the scanner 600. In the configuration of the present embodiment, at least the sensor holding portion 609 of the scanner 600 (front cover 500) and the ink supply portion 410L are disposed so as to partially overlap each other in the X direction, which serves as the first direction. In the configuration of the present embodiment, the plurality of reading portions (reading sensors) 601 and the ink supply portion 410L are disposed so as not to overlap each other in the X direction. Note that the reading portions 601 at both ends among the plurality of reading portions (reading sensors) 601 may be disposed so as to at least partially overlap the ink supply portion 410L in the X direction.

With the above configuration, the printer can be prevented from becoming larger when the scanner 600 is installed. Furthermore, when the printer is configured as a single-function printer without the scanner 600 installed, if the ink tank 430 is added to the overlap portion as necessary, it is possible to support ink of various colors without affecting the printer size.

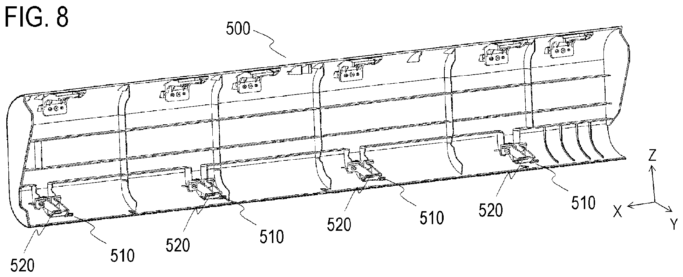

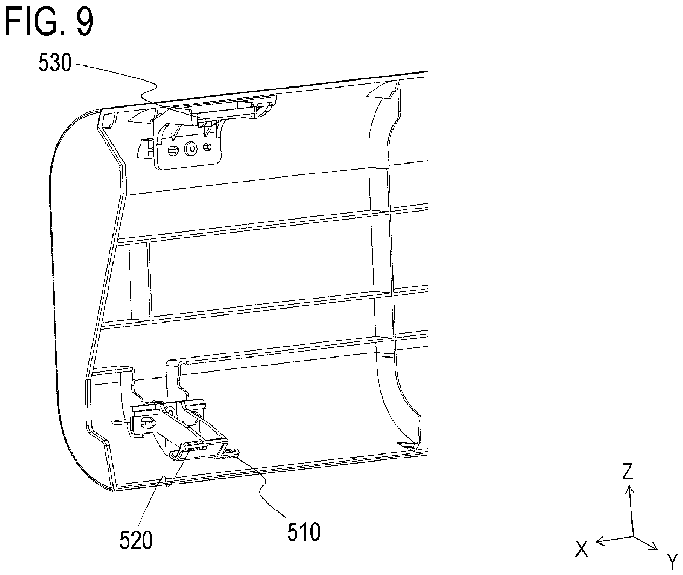

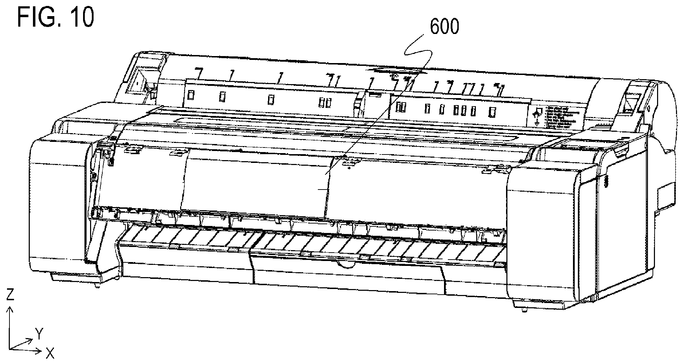

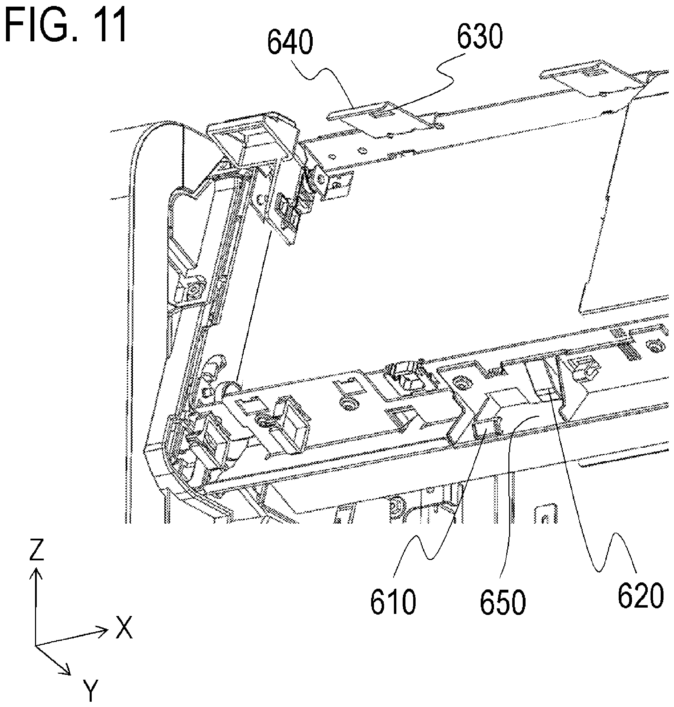

With reference to FIG. 8 to FIG. 11, the mounting configuration of the front cover 500 is described. FIG. 8 is a view of the front cover 500 when viewed from the rear surface, and FIG. 9 is a detailed view thereof. FIG. 10 is a perspective view of the scanner 600 in a state in which the front cover 500 is not mounted, and FIG. 11 is a detailed view of the component parts when the front cover 500 is assembled to the scanner 600.

The front cover 500 is provided with temporarily hooked portions 510, positioned portions 520, and fixed portions 530. The temporarily hooked portion 510 is a member that serves as a pivoting center when the front cover 500 is assembled to the scanner 600. The positioned portion 520 is a member configured to define a position when the front cover 500 is mounted to the scanner 600 in a predetermined posture (first posture). The fixed portion 530 is a member configured to define and fix, by cooperating with the positioned portion 520, the relative position between the scanner 600 and the front cover 500 in the predetermined posture (first posture).

On the front surface side of the casing 602 (the front surface side of the scanner 600), temporary hooking locking portions 610, each of which serves as a temporary hooking portion, positioning locking portions 620, each of which serves as a positioning portion, fixing locking portions 630, each of which serves as a fixing portion, and guide portions 640 and 650 are provided. The temporary hooking locking portion 610 is configured to be capable of locking the temporarily hooked portion 510. The temporary hooking locking portion 610 is a member capable of holding the front cover 500 by locking the temporarily hooked portion 510 when the front cover 500 is assembled to the scanner 600. The temporary hooking locking portion 610 is configured to prevent, by holding at least the lower portion with respect to the vertical direction, the front cover 500 from falling even if the hand is released from the front cover 500 when the front cover 500 is pivoted for assembly. The front cover 500 is held in a posture (second posture) different from the posture (first posture) when the front cover 500 is fixed to the scanner 600, with the temporarily hooked portion 510 being locked to the temporary hooking locking portion 610. The guide portion 640 is a member configured to move the positioned portion 520 toward the positioning locking portion 620 in the middle of pivoting when the front cover 500 is assembled to the scanner 600. The guide portions 640 and 650 guide the posture of the front cover 500 such that the posture of the front cover 500 is changed from the second posture to the first posture when the front cover 500 is lifted in a state in which the temporarily hooked portion 510 is locked to the temporary hooking locking portion 610.

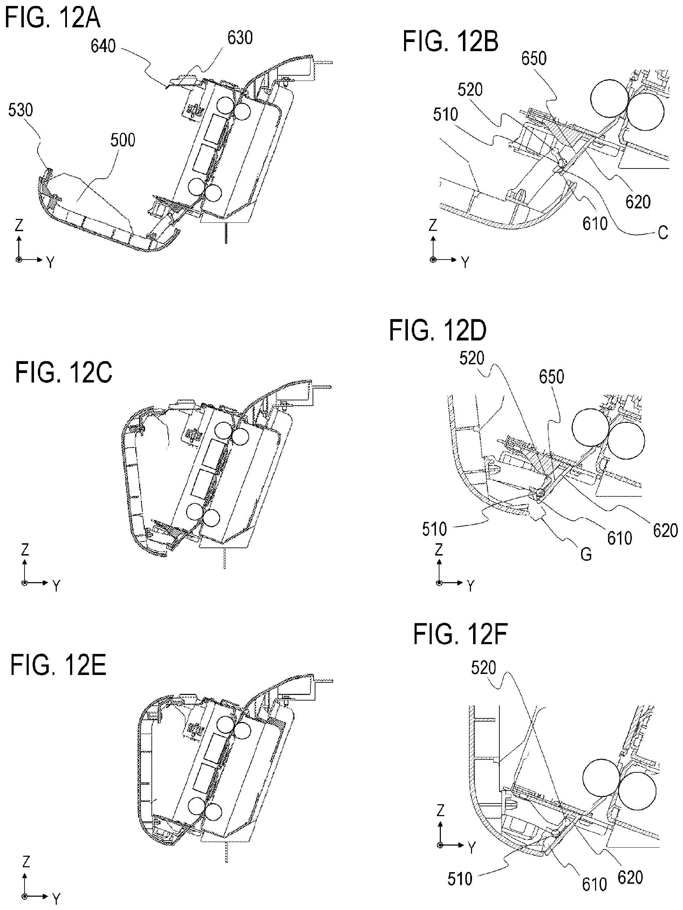

The operation when the front cover 500 is assembled to the scanner 600 is described using FIG. 12A to FIG. 12F. In FIG. 12A and FIG. 12B, first, the temporarily hooked portion 510 is hooked on the temporary hooking locking portion 610. In the present embodiment, the temporarily hooked portion 510 is formed in a cylindrical shape protruding laterally, and the temporary hooking locking portion 610 is configured in a hook shape with the upper side being open so as to receive the temporarily hooked portion 510. FIG. 12C and FIG. 12D illustrate a state in which the front cover 500 comes into contact with the guide portion 640 from FIG. 12A and FIG. 12B. At this stage, a gap G is formed between the front cover 500 and the scanner 600.

FIG. 12A and FIG. 12B illustrate the posture of the front cover 500 in a state in which the user releases his/her hand from the front cover 500 with the temporarily hooked portion 510 locked to the temporary hooking locking portion 610. The front cover 500 and the scanner 600 (casing 602) is in abutment against each other at an abutment portion C such that pivoting of the front cover 500 with respect to the scanner 600 about the locking location (as a fulcrum) between the temporarily hooked portion 510 and the temporary hooking locking portion 610 is restricted.

The front cover 500 is lifted in a state in which the temporarily hooked portion 510 is locked to the temporary hooking locking portion 610, and is mounted on the scanner 600. At that time, the change in the posture of the front cover 500 until the front cover 500 reaches a state of being guided by the guide portion 640 is pivoting using, as a fulcrum, the locking location between the temporarily hooked portion 510 and the temporary hooking locking portion 610.

In the process in which the front cover 500 is incorporated from the form illustrated in FIG. 12C and FIG. 12D to the form illustrated in FIG. 12E and FIG. 12F, with the action of the guide portions 640 and 650, the contacted front cover 500 is operated to be lifted upward with respect to the main body. In the configuration of the present embodiment, the guide portion 640 (first guide portion) configured to guide the fixed portion 530 to a position at which the fixed portion 530 is locked to the fixing locking portion 630 is configured in a slope shape so that the front cover 500 is led upward in the process of being incorporated. At that time, in conjunction with the operation of the front cover 500, the positioned portion 520 is moved in the direction of being locked to the positioning locking portion 620 while being guided by the guide portion 650 (second guide portion), which is configured in a slope shape in a similar manner, so that the front cover 500 is positioned. The temporary hooking locking portion 610 is configured in a hook shape with the upper side being open as described above. In conjunction with the operation of the front cover 500, the temporarily hooked portion 510 is moved in the direction of being released from the locking to the temporary hooking locking portion 610, and the gap G is filled.

FIG. 12E and FIG. 12F illustrate a state in which the front cover 500 is incorporated in the scanner 600. The fixed portion 530 is locked to the fixing locking portion 630. In the present embodiment, the fixed portion 530 has a claw-shaped portion (claw portion) capable of being deflected and deformed, and the fixing locking portion 630 has a hole-shaped portion (hole portion) into which the claw-shaped portion of the fixed portion 530 is capable of being fitted and caught. When the front cover 500 reaches the assembly position, the claw-shaped portion enters the hole-shaped portion to be locked thereto so that the front cover 500 is fixed. In the present embodiment, the fixed portion 530 is made of a resin material, and the fixing locking portion 630 is made of a metal material. An engagement state (fixed state) is formed with deformation of each portion. This fixing configuration is not limited to the form of the claw shape and the hole shape, and may be a screwing configuration.

When the front cover 500 is removed for maintenance or the like of the scanner 600, a procedure reverse to the above-mentioned mounting procedure is followed. First, the fixed portion 530 is released from the fixing locking portion 630. Specifically, the fixed portion 530 is lifted upward by a finger being hooked on the taper portion of the fixed portion 530, while the fixing locking portion 630 is pushed downward to be deflected, thereby releasing the fixed portion 530. Next, in the process of pivoting the front cover 500 in the removal direction, the positioned portion 520 is released from the positioning locking portion 620. When the front cover 500 is pivoted further, the temporarily hooked portion 510 is hooked on the temporary hooking locking portion 610. Through such a procedure, the front cover 500 is removed from the scanner 600, and the inside of the scanner 600 becomes accessible. Note that, in a state in which the temporarily hooked portion 510 is locked to the temporary hooking locking portion 610, the front cover 500 does not fall from the scanner 600. Thus, it is possible to perform maintenance work without removing the front cover 500 from the scanner 600.

Various embodiments have been described in detail above but it will be understood that the present disclosure is not limited to these embodiments and encompasses all modifications, variants, alternatives and equivalents falling within the scope of the appended claims.

## Claims

1. A recording apparatus, comprising:
a casing;
a recording portion configured to perform recording on a recording material by using liquid;
a liquid supply portion disposed on a side of a front surface of the casing, the liquid supply portion being configured to supply the liquid to the recording portion by being connected to a liquid container configured to store the liquid to be used in the recording portion; and
a reading unit disposed on the side of the front surface of the casing and configured to perform reading from a document at a reading position, the reading unit being rotatable about a rotation center of a rotation shaft extending in a first direction between an open position at which the reading position is opened and a closed position at which the reading position is covered,
wherein the liquid supply portion and the reading unit are disposed so as to partially overlap each other in the first direction.

2. The recording apparatus according to claim 1,
wherein the liquid supply portion and the reading unit have a region in which the liquid supply portion and the reading unit overlap each other in a case of viewing in the first direction.

3. The recording apparatus according to claim 1 or 2,
wherein the liquid supply portion and the rotation shaft have a region in which the liquid supply portion and the rotation shaft overlap each other in a case of viewing in the first direction.

4. The recording apparatus according to any one of claims 1 to 3,
wherein the reading unit includes a reading sensor configured to read the document and a holding portion configured to hold the reading sensor,
wherein the liquid supply portion and the holding portion partially overlap each other in the first direction, and
wherein the liquid supply portion and the reading sensor are disposed so as not to overlap each other in the first direction.

5. The recording apparatus according to any one of claims 1 to 4, further comprising an operation panel for operating the recording apparatus,
wherein the operation panel is disposed on a rear side of the reading unit and the liquid supply portion.

6. The recording apparatus according to any one of claims 1 to 5,
wherein the liquid supply portion is provided on each side of the reading unit in the first direction.

7. The recording apparatus according to any one of claims 1 to 6,
wherein the liquid supply portion includes a connection portion onto which the liquid container is detachably mountable and which is capable of receiving supply of the liquid from the liquid supply portion,
wherein the liquid supply portion supplies the liquid supplied from the liquid container to the recording portion through a tube connected to the liquid supply portion,
wherein the liquid supply portion includes a plurality of the connection portions,
wherein the plurality of connection portions include a first connection portion on which the liquid container is mounted and a second connection portion on which the liquid container is not mounted, and
wherein the liquid supply portion overlaps a part of the reading unit in the first direction at the second connection portion.

8. The recording apparatus according to claim 7,
wherein the second connection portion and the reading unit have a region in which the second connection portion and the reading unit overlap each other in a case of viewing in a second direction intersecting the first direction.

9. The recording apparatus according to claim 7 or 8,
wherein the liquid container mounted on the first connection portion and the reading unit are aligned along the first direction.

10. The recording apparatus according to any one of claims 7 to 9,
wherein the first connection portion and the second connection portion are arranged along the first direction.

11. The recording apparatus according to any one of claims 7 to 10,
wherein the liquid container and the reading unit have a region in which the liquid container and the reading unit overlap each other in a case of viewing in the first direction.

12. The recording apparatus according to any one of claims 1 to 3, further comprising an exterior that is detachably mountable onto the casing so as to cover the reading unit as a part of the front surface of the casing,
wherein the exterior includes a positioned portion and a temporarily hooked portion and is fixed to the casing in a state of being in a first posture with respect to the casing, and
wherein the casing includes:
a positioning portion configured to lock the positioned portion in a case where the exterior is in the first posture;
a temporary hooking portion capable of locking the temporarily hooked portion, the temporary hooking portion being capable of holding the exterior in a second posture different from the first posture with respect to the casing in a case where the exterior is not in the first posture; and
a guide portion configured to guide a posture of the exterior such that the posture of the exterior is changed from the second posture to the first posture in a case where the exterior is lifted in a state in which the temporarily hooked portion is locked to the temporary hooking portion.

13. The recording apparatus according to claim 12,
wherein the temporary hooking portion does not lock the temporarily hooked portion in a case where the exterior is in the first posture.

14. The recording apparatus according to claim 12 or 13,
wherein, in a case where the exterior in a state in which the temporarily hooked portion is locked to the temporary hooking portion is lifted and mounted onto the casing, a change in the posture of the exterior from the second posture until the exterior reaches a state of being guided by the guide portion comprises pivoting using, as a fulcrum, a locking location between the temporary hooking portion and the temporarily hooked portion.

15. The recording apparatus according to any one of claims 12 to 14,
wherein the exterior has a fixed portion, and
wherein the casing has a fixing portion configured to fix the fixed portion in a case where the exterior is in the first posture.

16. The recording apparatus according to claim 15,
wherein the positioned portion and the temporarily hooked portion are positioned lower than the fixed portion in a case where the exterior is in the first posture.

17. The recording apparatus according to claim 15 or 16,
wherein a position of the fixed portion in a case where the exterior is in the second posture is lower than a position of the fixed portion in a case where the exterior is in the first posture.

18. The recording apparatus according to any one of claims 15 to 17,
wherein the guide portion includes:
a first guide portion configured to guide the fixed portion to a position at which the fixed portion is locked to the fixing portion; and
a second guide portion configured to guide the positioned portion to a position at which the positioned portion is locked to the positioning portion.

19. The recording apparatus according to any one of claims 15 to 18,
wherein the fixed portion has a claw portion and is configured to be capable of being deflected and deformed,
wherein the fixing portion has a hole portion into which the claw portion is capable of being fitted thereinto, and
wherein the fixed portion is fixed to the fixing portion by the claw portion being locked to the hole portion.

20. The recording apparatus according to any one of claims 15 to 19,
wherein the fixed portion is fixed to the fixing portion by screwing.
